# EUROPEAN PATENT APPLICATION

(11) **EP 1 394 039 A1**
(43) Date of publication of application: **03.03.2004**
(21) Application number: 02012077.0
(22) Date of filing: 31.05.2002
(51) Int. Cl.: B64C 39/00, B63H 1/08

(54) **Propeller**

(71) Applicant: LOSI, Bruno, I-53034 Colle Val D'Elsa SI (IT)
(72) Inventor: LOSI, Bruno, I-53034 Colle Val D'Elsa SI (IT)
(74) Representative: Celestino, Marco

(57) **Abstract**

A propeller (20) having an armature (2) with axis (1) orthogonal with respect to a direction of thrust T. On the armature (2) are hinged (3) single blades (4) having each an arm (5) with a slide (6) that slides in a track (8) made on a actuating member (7) co-axial to the armature (2). The track (8) is eccentric with respect to the axis (1), in particular, its lower part (8b) describes a circumference (8') concentric with the armature (2), whereas its upper part (8a) is oblated towards the axis (1). The particular shape of the track (8) allows to move each blade (4) to a predetermined angular position for every point of revolution about the axis (1). During the rotation of the propeller (20) in the blades (4) controlled by the portion of track (8b) are arranged in a neutral position along a circumference concentric with the armature (2), whereas the blades that are controlled by the portion (8a) of the guide (8) deviate from the circumference above described. The propeller is suitable for watercrafts and aircrafts and is capable of improving the manoeuvrability with respect to known means, owing to an easy system of orientation of the blades. Used with vertical axis it is implementable on watercrafts, whereas with horizontal axis it is implementable on aircrafts.

## Description

### Field of the invention

The present invention relates to a propulsor having axis orthogonal to the propulsion direction and equipped with swivelling blades. In particular the type of propulsor can be used, with special adaptation, both on a watercraft that on an aircraft.

### Description of the prior art

As known, most common propulsion systems for watercrafts have horizontal axis, normally propellers, mainly for simplicity of structure provided for this type of propulsors thus leading to provide and analyse a wide variety of models.

A possible alternative provides propulsion systems having vertical axis, also called Voith-Schneider propulsors, from the names of the first inventors of such a structure. Such propulsors generate radial thrusts owing to a plurality of blades arranged peripherally to an armature having vertical axis. At every revolution about the axis, the blades change inclination according to their angular position. Mechanisms are provided for adjusting the positions of the blades so that, with the rotation of the armature, the blades immersed into water generate radial thrusts in a predetermined direction.

Both types of propulsors have had however, up to now, some drawbacks; for example, in the case of propulsors with horizontal axis there is a limited range of optimal operation; they have, in fact, a good efficiency only for particular speeds. Other drawbacks for this type of propulsors are the high values of centrifugal and tangential forces created during the operation and give rise, unavoidably, to loss of energy to the propulsion system.

These and other drawbacks have been fairly overcome by the use of propulsors having vertical axis.

The propulsion system of known art having vertical axis has not, however, been used much, in particular owing to the complexity of adjusting the steering means and of the system of orientation of the blades.

The impossibility of providing an easy system of steering and of adjusting the blades affects unavoidably the control and then the driving quality of the watercraft.

To overcome this drawback propulsion systems have been suggested having vertical axis with high encumbrance and, therefore, scarcely practical.

Concerning aircrafts the need is felt of vertical take off and manoeuvres in motionless flight. helicopters, allow these manoeuvres but are bulky owing to the size of the propeller. Other aircrafts with propulsors with horizontal axis require horizontal bulky surfaces for the necessary lift for flying.

### Summary of the invention

It is an object of the present invention to provide a structure of propulsor for watercrafts and aircrafts capable of improving the manoeuvrability with respect to the known means.

It is another object of the present invention to provide a structure of propulsor for watercrafts and aircrafts equipped with a system of orientation of the blades much easier with respect to the solutions used up to now.

It is a particular object of the present invention to provide a propulsor having vertical axis that has the above described advantages and that is easily implementable on watercrafts.

It is another object of the present invention to provide a structure of aircraft with high manoeuvrability that uses a propulsor according to the principles of the invention.

These and other objects are achieved by the propulsor of the present invention, whose main characteristic is of comprising a plurality of blades arranged uniformly along the boundary of an armature with axis perpendicular to the direction of thrust. Each blade is capable of rotating about a hinge integral to the armature and has an arm having a pin that slides in a track made on an actuating member. The latter is co-axial to the armature whereas the track has a path eccentric with respect to the axis of the propulsor, shaped such that that the blades reach a predetermined angular position for every relative position between a support disk and guiding element. Each blade has a curved shape capable of reaching a neutral position on a circumference concentric to the armature. By a rotation with respect to said hinge, by the sliding of the pin on the track of the actuating member, every blade can deviate from said circumference. With the rotation of the armature, the blades that deviate from the circumference change the amount of movement of fluid wherein immersed deviating towards the inside of the armature, thus producing thrusts orthogonal to the surface of the blades same. The overall thrust is orthogonal to the axis of the armature and the shape of the track can give a optimal result in a predetermined direction. The rotation of the actuating member causes the rotation of the overall thrust, whereas the speed of the armature determines the intensity of this overall thrust.

If the propulsor according to the invention is mounted on a watercraft under the floating line and has vertical axis with respect to the watercraft, the rotation of the actuating member about a vertical axis allows to orient the direction of the thrust and then an easy manoeuvre.

Advantageously, a watercraft can provide two propulsors according to the invention, having vertical parallel axis and arranged symmetrically with respect to the midplane of the watercraft. This way, with various combinations of position of respective steering parts, the watercraft can be manoeuvred in a desired direction.

According to a particular aspect of the invention, an aircraft comprises at least four propulsors with horizontal axis, according to the invention. The propulsors are preferably arranged in couples laterally and opposite to one another with respect to the midplane of the aircraft. This arrangement allows to manoeuvre the aircraft by suitably adjusting the steering parts of the propulsion system.

### Brief description of the drawings

Further characteristics and the advantages of the propulsion system according to the present invention will be made clearer with the following description of an embodiment thereof with reference to attached drawings wherein:
- figure 1 shows an elevational front view of a propulsor according to the invention;
- figure 2 shows a cross sectional partial view of the device of figure 1;
- figure 3 shows a different embodiment of the propulsor of figure 1, with a different shape of the track and a different orientation of the blades;
- figure 4 shows the profile of a blade of the propulsor of figure 3;
- figure 5 shows a front view of the blade of figure 4;
- figure 6 shows an advantageous arranging two propulsors on a watercraft;
- figure 7 shows diagrammatically the direction of the overall thrust according to the rotation of the steering parts of the two propulsors;
- figure 8 shows an alternative shape of the track with respect to the propulsor of figure 3, suitable for aircrafts;

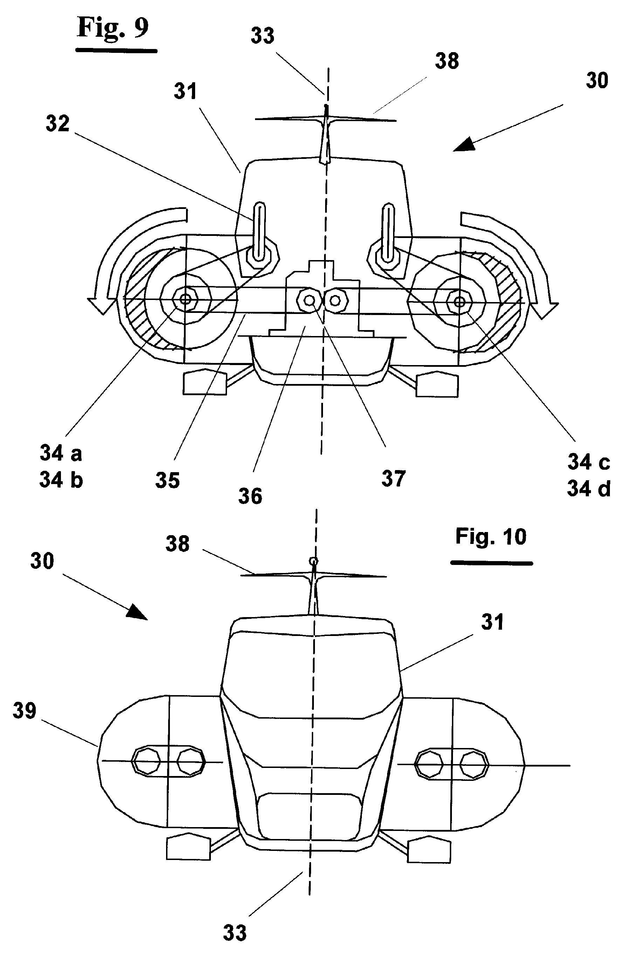

- figures 9 and 10 show a front view and a rear view of an aircraft that uses propulsors according to the invention;

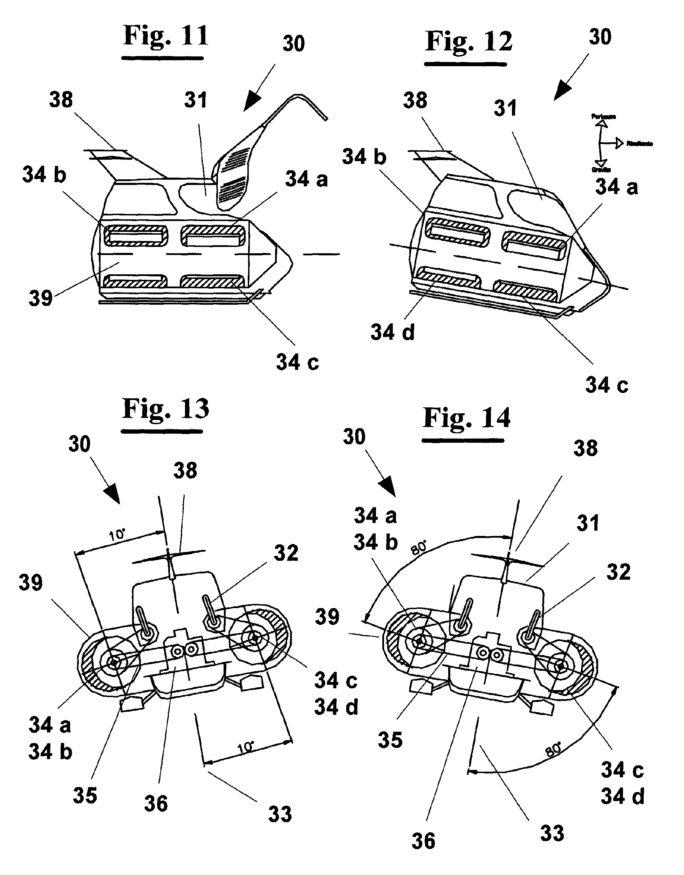

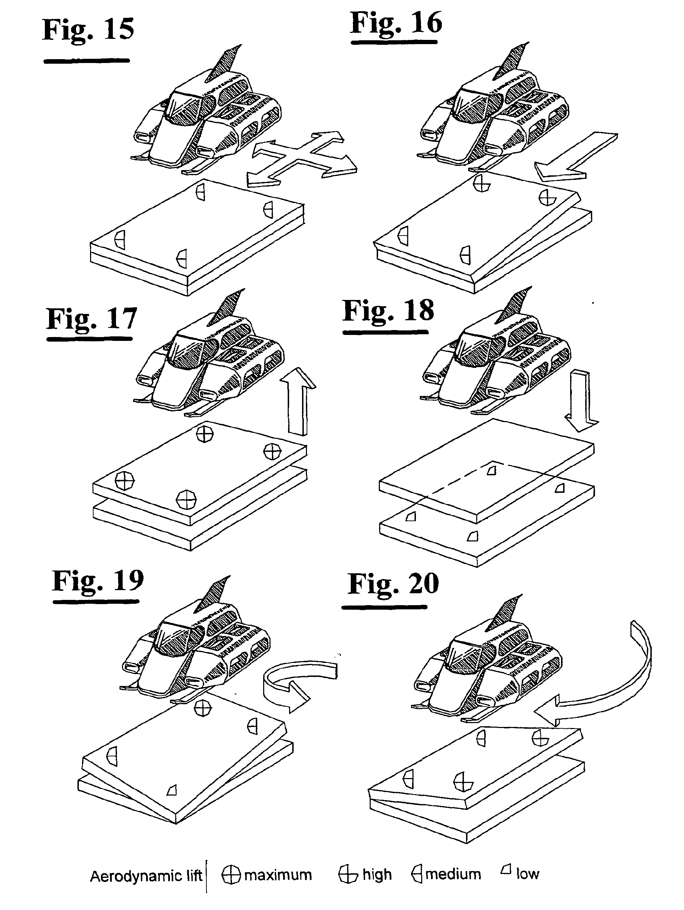

- figures 11 and 12 show an elevational side view of the aircraft of figure 9 and 10, in two different operative positions;
- figures 13 and 14 show the aircraft of figures 9 and 10 in two different flight positions;
- figures from 15 to 20 show diagrammatically the direction of the overall thrust according to the angular position of the steering parts of the propulsors for an aircraft.

### Description of a preferred embodiment

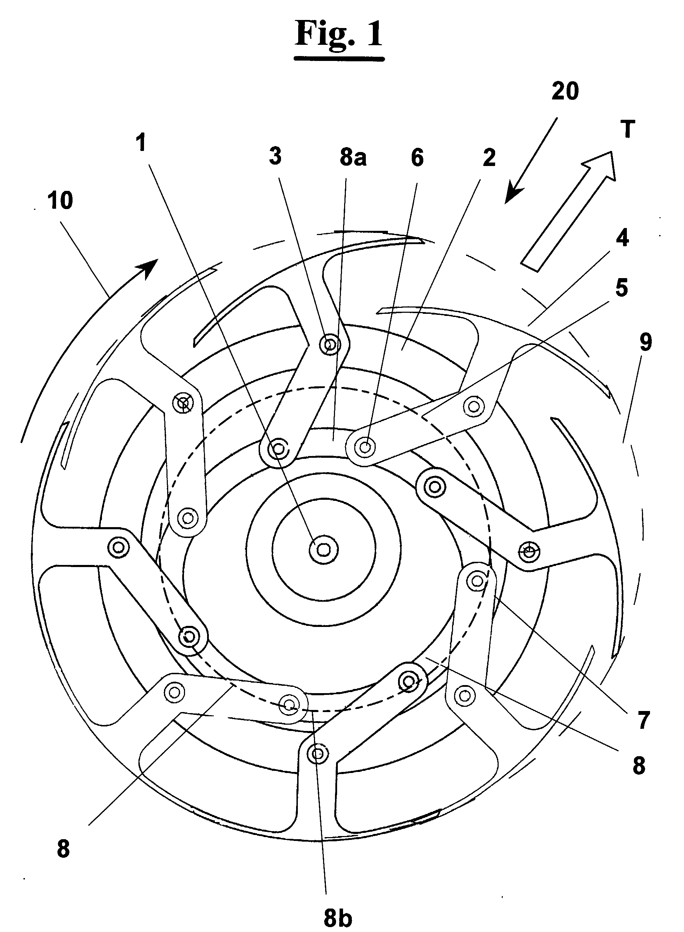

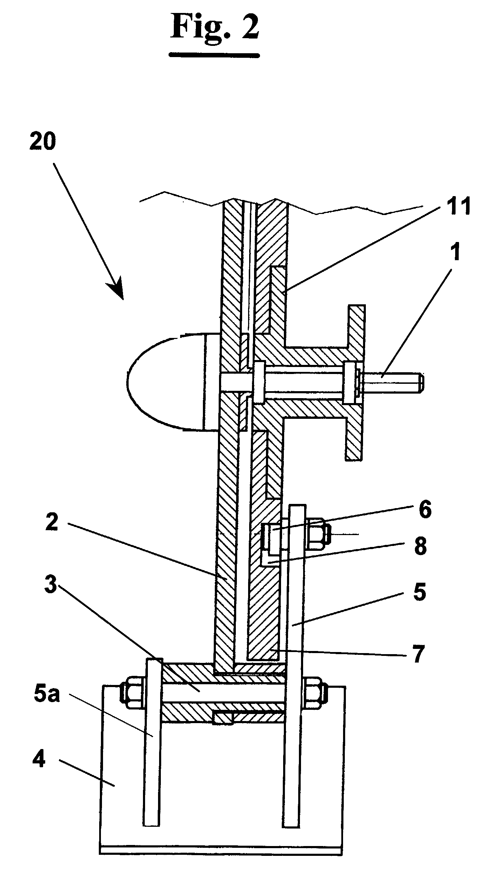

With reference to figures 1 and 2, a propulsor 20 comprises an armature 2 having axis 1 orthogonal with respect to a direction of thrust T.

On armature 2 are hinged at 3 single blades 4 whose curved shape can be seen from a side and front view in figures 1 and 2.

Each blade 4 is equipped with an arm 5 having a slide 6 that slides in a track 8 made on an actuating member 7. The latter is co-axial to armature 2 whereas the track 8 is eccentric with respect to axis 1, in particular, its lower part 8b describes a circumference 8' concentric with armature 2, whereas its upper part 8a is oblated towards axis 1.

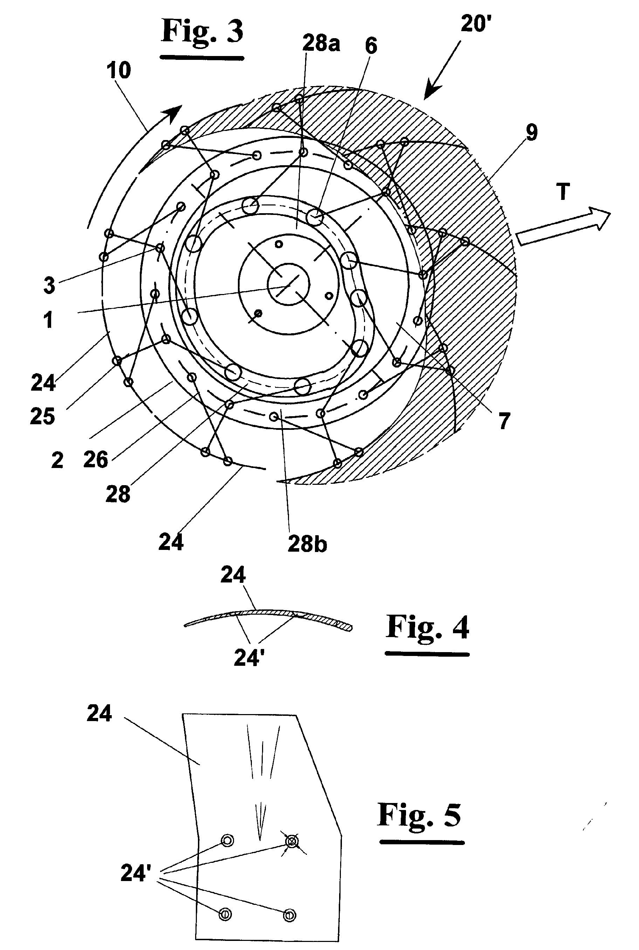

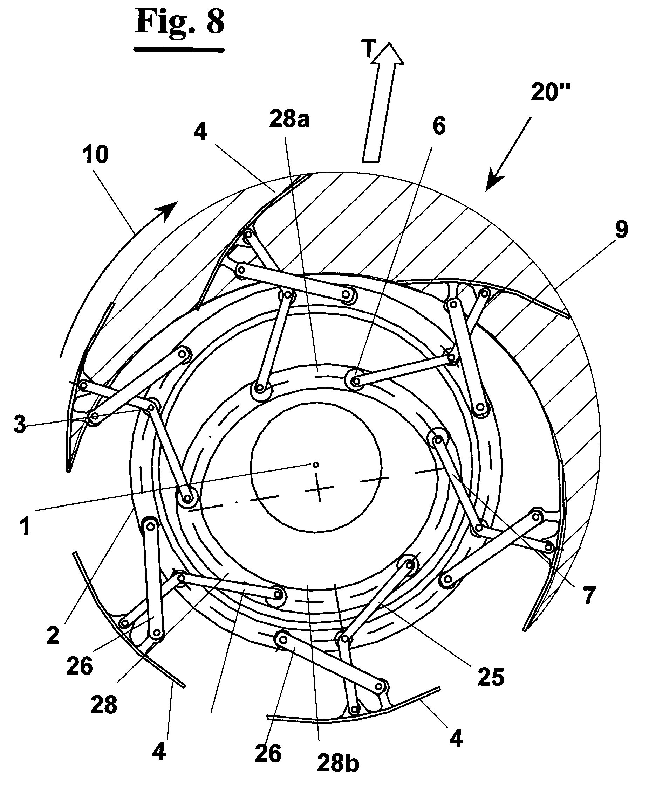

A particular shape of track 8 allows each blade 4 to move to a predetermined angular position for every point of revolution about axis 1. During the rotation of the propulsor 20 in the direction 10 the blades 4, controlled by the portion of track 8b, are arranged in neutral position along a circumference concentric with armature 2, whereas the blades that are controlled by portion 8a of guide 8 deviate from the circumference above described. In particular, the embodiments of the propulsor according to the invention, of figures 3 and 8, have arms 25 hinged to blades 24. Further rods 26 are provided having an end hinged to the blades 24 and the other end hinged to armature 2. The fastening points 24' of arms 25 and rods 26 to blades 24 are indicated in figure 4 and 5.

Track 28 of actuating member 7 can, advantageously, have two characteristics shapes, shown in figures 3 and 8, depending whether the propulsor is used on watercrafts or aircrafts, thus giving a respectively lower or higher opening to the blades towards the direction of thrust.

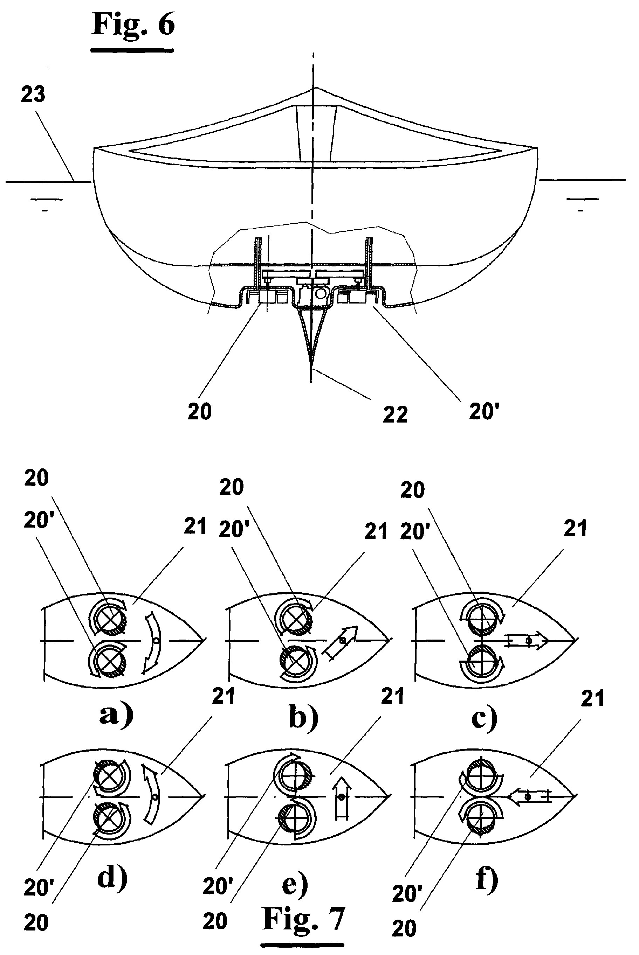

In case of watercrafts the two propulsors 20 and 20', are advantageously arranged symmetrically with respect to the midplane 22 of a watercraft 21 and below floating line 23, figure 6.

This arrangement allows to manoeuvre easily the watercraft simply rotating the actuating member 7 as indicated in figures 7a-f.

Correspondingly, in case of an aircraft 30 four propulsors 34a-d are provided, arranged in couples opposite to one another with respect to a midplane 33.

Propulsors 34a-d are driven by a motor 36 by a transmission 35 and are manoeuvred, according to a possible solution, by the motors of the aircraft 30 by a plurality of cloches 32 located in a cockpit 31, moving directly the steering parts. They can be operated by a electronic control system.

Such arrangement allows the drives to control and manoeuvre easily the aircraft simply by adjusting the angular position of the steering parts of the propulsors 34a-d, as indicated in figures from 15 to the 20.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Propulsion system for watercrafts and aircrafts comprising a plurality of blades arranged uniformly along the boundary of an armature with axis perpendicular to the direction of thrust, wherein said blades are capable of rotating about respective hinges integral to the armature,
**characterised in that**
the blades are equipped with an arm having a pin that slides in a track made on an actuating member co-axial with the armature, said track being eccentric with respect to the axis of the armature and means are provided for adjusting the angular position of said actuating member with respect to said axis.

2. Propulsion system for watercrafts and aircrafts according to claim 1, wherein said track has a shape substantially elliptical.

3. Propulsion system for watercrafts and aircrafts according to claim 1, wherein said track has a shape that is oblated at the side closer to the axis.

4. Propulsion system for watercrafts and aircrafts according to claims from 1 to 3, wherein each blade has a curved shape capable of reaching a neutral position laying on a circumference concentric having the axis of the armature, wherein by a rotation with respect to said hinge an by the sliding of the slide on the track of the actuating member, every blade can deviate from said circumference, thus causing a change of the amount of movement of the fluid towards the inside of the armature obtaining, for reaction, a single thrust orthogonal to the surface of the blades, whereby the overall thrust is orthogonal to the axis of the armature and the shape of the track can give a optimal result in a predetermined direction.

5. Propulsion system for watercrafts and aircrafts according to claim 4, wherein a rotation of the actuating member causes a variation of the direction of the overall thrust.

6. Watercraft equipped with a propulsion system comprising at least a propulsor according to claims from 1 to 5.

7. Watercraft according to claim 6 wherein two propulsors are provided having vertical axis opposite with respect to the midplane.

8. Aircraft comprising an cockpit and a propulsion system according to claims from 1 to 5.

9. Aircraft according to claim 8, wherein two couples of propulsors are provided counter rotating opposite to one another with respect to the midplane of the cockpit.
